# EUROPEAN PATENT SPECIFICATION

(11) **EP 2 875 655 B1**
(45) Date of publication and mention of the grant of the patent: **28.04.2021**
(21) Application number: 13737022.7
(22) Date of filing: 21.06.2013
(51) Int. Cl.: H04W 4/029, G06Q 50/10

(54) **INFERRING USER INTERESTS**
RÜCKSCHLIESSEN AUF BENUTZERINTERESSEN
DÉDUCTION D'INTÉRÊTS D'UN UTILISATEUR

(30) Priority: 22.06.2012 US 201261663035 P; 25.06.2012 US 201261663789 P
(43) Date of publication of application: 27.05.2015
(73) Proprietor: Google LLC, Mountain View, CA 94043 (US)
(72) Inventor: UDESHI, Tushar, Mountain View, California 94043 (US); YANG, Guang, Mountain View, California 94043 (US); KIRMSE, Andrew, Mountain View, California 94043 (US); BELLVER, Pablo, Mountain View, California 94043 (US)
(74) Representative: Anderson, Oliver Ben
(86) International application number: PCT/US2013/047179
(87) International publication number: WO 2013/192586

(56) References cited:
- JP-A- 2010 019 641
- KR-A- 20080 045 331
- KR-A- 20100 122 978
- US-A1- 2008 248 815
- US-A1- 2009 012 953
- US-A1- 2010 280 920
- US-A1- 2010 331 016
- US-A1- 2012 143 859
- US-A1- 2012 143 859
- US-A1- 2012 143 859

## Description

### BACKGROUND

Mobile devices such as smartphones and tablets have opened up a variety of new services that can be provided to users on the go. The geographic location of a mobile device can be determined using any of several technologies for determining its position, including by referencing cellular network towers, WiFi locations, and/or global positioning systems (GPS). Where users opt in to allowing services to use their geographic location, location-based services can be provided through the user's mobile device. A location-based service is an information or entertainment service that is accessible on mobile devices through a mobile network and that uses information on the geographical position of the mobile device. First-generation location-based services can include services to identify a location of a person or object, such as discovering the nearest ATM or the current location of a contact. Such services can also include offer mobile commerce services by, for example, providing coupons or advertising directed at customers based on their current location.

US 2008/0248815 A1 discloses methods and systems that record the location of a user and transmit targeted content to a user based upon their current and past location information. A network is configured to include a server programmed with a database of targeted content, a database of location information, a database of user information, a database searching algorithm, and a wireless communication system capable of communicating with the user's mobile device. The location of the mobile device is ascertained and recorded. The location information is analyzed to determine the routes taken by the user, businesses visited by the user, and other behaviors of the user. Targeted content is sent to the mobile device of the user and whether the user visits the physical locations associated with the targeted content is monitored. Payment systems, phone exchange systems, and other features may also be integrated to provide detailed conversion tracking to producers of targeted content and business owners.

US 2012/0143859 A1 discloses a location-related entity ranking technique that allows a user to see the ranking of location-related entities near a desired location in response to a query. The technique can leverage the searches performed by a community of mobile device users at a given location and at a given time to infer the location-related entities that are popular at this specific location and time window. The technique can also filter out or re-rank these location-related entities based on the personal preferences of the person that submits the query and group preferences of a group to which the user belongs. The personal preferences can also be context specific (i.e. different restaurant preferences for lunch and dinner times).

US2009012953 discloses flexible, user-adapted, continuous searching, on behalf of a particular user, for points of interest relevant to the user's current location within a specifically computed personal region of interest. In a general case, the personal region of interest is computed as a function of the user's level of disposition towards the searched-for points of interest. The level of disposition towards the searched-for points of interest may, in turn, be based on two or more of the user's location, the current date and time, a history of the user's interaction with the POI-searching system, including user-initiated searches and user selections from displayed search results, a user profile developed for, and continuously updated on behalf of, the user, and a current context for the search, as specified by a search query or by other context-specifying means. The personal region of interest generally defines an abstract area, volume, or hypervolume within which method and system embodiments of the present invention search for points of interest.

US2010331016 discloses methods and systems for location-based promotions. A location of a mobile device is determined and transmitted to a server computer via a wireless communications network, along with user identification information. One or more location-based applications are run on the mobile device. At least one of the applications receives location-based content based on a context determined by the server computer. The location-based content including a promotion for a location associated with the location-based content. The application further executes a promotional function based on the promotion.

### SUMMARY

The present invention provides a method as set out in claim 1, a computing device as set out in claim 14, and a computer-readable storage medium as set out in claim 15.

Techniques are disclosed herein for inferring user interests and serving recommendations to the user. In one example, a method for serving recommendations based on inferred user interests includes receiving a plurality of location data points for a user, the location data points including a geographic position and a time, and storing the location data points in a data store. The location data points are processed using a processor in communication with the data store to generate visited place data for the user where the visited place data represent a location visited by the user, a category of the location visited, and a time. A histogram of the visited place data is built across categories of locations visited and the histogram is stored in the data store. Recommendations are then served to the user within a category represented on the histogram. In certain examples, the triggering of serving the recommendations can be based on the times of the visited place data within the category for the user. Serving a recommendation can also include determining a current location of the user and performing a local search for places within a category for recommendation to a user. Results of such a search can be used as recommendations.

In other examples, processing the location data points to generate visited place data for the user can include clustering location data points for the user. Further, processing the location data points to generate visited place data for the user can include performing a local search to determine a category for the visited place. "Check in" data representing a user indication that a user has visited a particular place may also be received and included in the visit data.

In further examples, building the histogram can include sorting visited places by category and include for each category the number of visits to places within that category, and the time of the visits. Building the histogram can also include sorting visited places on a weekly basis. The visits can further be assigned to two hour timeslots within the histogram week.

The examples can also include reviewing a query log database for the user to determine user searches and selections of search results that fall into a category that corresponds to a category in the histogram, and adding data to the histogram indicating the number of searches or selections of search results that fall into the category.

In some examples, the location data points can be filtered so as to include data points that are within a threshold distance from a user's home location and exclude location data points reflecting the user traveling at greater than the threshold distance away from home.

In a further example, a method for serving recommendations based on inferred user interests that includes accessing, using a processor, a data store having visited place data for a user where the visited place data includes for each visited place a time and a category into which the visited place falls. A histogram of the visited place data is built across categories of locations visited and is store in the data store. A recommendation is then served to the user within a category represented on the histogram.

In certain examples, the triggering of serving the recommendations can be based on the times of the visited place data within the category for the user. Serving a recommendation can also include determining a current location of the user and performing a local search for places within a category for recommendation to a user. Results of such a search can be used as recommendations.

In some examples, a query log database for the user is reviewed to determine user searches and selections of search results that fall into a category that corresponds to a category in the histogram, and adding data to the histogram indicating the number of searches or selections of search results that fall into the category.

In another example, a system for serving recommendations based on inferred user interests is provided. The system includes at least one processor and a memory having instructions stored thereon for execution by the processor. The instruction include instructions for a location receiving module that receives a plurality of location data points for a user, where the location data points include a geographic position and a time, and stores the location data points in a data store. The instructions also include a location data processing module that processes the location data points to generate visited place data for the user, where the visited place data representing a location visited by the user and a time. The system includes further instructions for an information collection module that determines a category for the visited place and a prediction module that builds a histogram of the visited place data across categories of locations visited and storing the histogram in the data store. Further instructions are provided for an output module that serves a recommendation to the user within a category represented on the histogram.

In some examples, the prediction module can trigger the serving of the recommendation based on the times of the visited place data within the category for the user. The output module can also determine a current location of the user and perform a local search for places within a category for recommendation to a user. Further the prediction module can review a query log database to determine categories for which the user searches or selects search results and adds this data to the histogram.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a schematic diagram of one example of a mobile network;
FIG. 2 is a schematic diagram of one example of a computer system;
FIG. 3 is a schematic diagram of one example of a system for inferring user interests and making recommendations;
FIG. 4 is an example diagram of location data;
FIG. 5 is a schematic diagram illustrating an example check in screen; and
FIG. 6 is a flowchart that schematically depicts example operations for inferring user interests and providing recommendations.

### DETAILED DESCRIPTION

Techniques are disclosed herein for inferring user interests and serving recommendations. One example architecture for inferring user interests can include a server that, when a user opts in and in accordance with published privacy policies, receives location information from a user's mobile device. Where the location information is raw location data, it can be processed to determine specific places (e.g., entities, destinations, businesses, residences, buildings, etc.) that a user has visited. This information can also be obtained based on a user "check-in" made by the user's mobile device. In such instances, the server can determine additional information about one or more places visited by the user-such as respective classifications or categories associated with or appropriate for each of the visited one or more places. This type of information can be determined, for example, based on a search made using a location-sensitive search engine. By tracking the categories of places visited by a user, the user's interests can be inferred.

A prediction module can sort the visit data into a histogram according to category. This allows the system to readily observe patterns in the visit data and make predictions about which types of visits will recur. Based on such data, the prediction module can trigger the serving of a recommendation based on the prediction. This recommendation can then be displayed on the user's mobile device.

In situations discussed below in which systems and devices collect or make use of personal information about the user (e.g., search histories, location, etc.) the user may be provided with an opportunity to control whether programs or features of the systems and devices can collect user information (e.g., information about a user's e-mail, a user's social network, social actions or activities, profession, a user's preferences, user's Internet search history, a user's current location, etc.), or to control whether and/or how to the systems and devices may receive content that may be relevant to the user. In addition, certain data may be treated in one or more ways before it is stored or used by the systems and devices, so that personally identifiable information is removed. For example, a user's identity may be treated so that no personally identifiable information can be determined about the user, or a user's geographic location may be generalized where location information is obtained (such as to a city, ZIP code, or state level), so that a particular location of a user cannot be determined. Thus, the user may have control over how information is collected about the user and used by the systems and devices described herein.

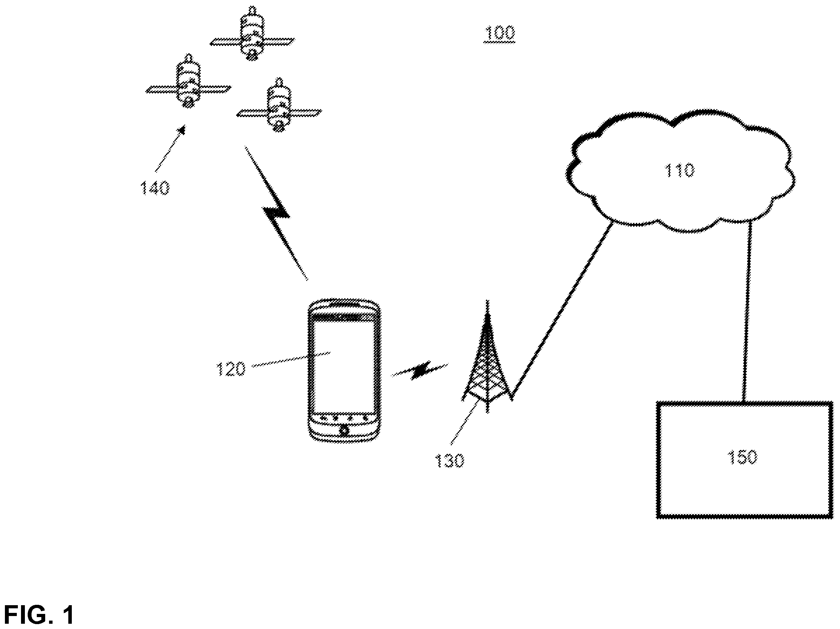

FIG. 1 illustrates an example of a mobile network 100 in which one or more of the examples disclosed herein can be implemented. The mobile network 100 includes a communications network 110 and a mobile device 120. The mobile device 120 can connect to the communications network 110 via various access points 130. Although one mobile device 120 and one access point 130 are illustrated for brevity, the mobile network 100 can include any number of mobile devices and access points.

The mobile device 120 can be or can include any device that is configured to exchange data over the communications network 110, such as a mobile phone, tablet computer, laptop computer, and so forth. The mobile device 120 can also be or can include devices that are not necessarily "mobile," such as desktop computers. The communications network 110 can include any of a variety of networks or combinations of networks, such as GSM, TDMA, CDMA, IEEE 802.11, Bluetooth, Wi-Fi, or any other wired or wireless networks. The access points 130 can be transceivers that provide a gateway between the mobile device 120 and the communications network 110. For example, the access points 130 can be wireless routers or cellular network towers. In some examples, the mobile device 120 can also receive Global Positioning System (GPS) signals transmitted from GPS satellites 140.

In the illustrated example, the mobile network 100 also includes a server 150 that can exchange data with the mobile device 120 via the communications network 110. The server 150 can be implemented on one or more computer systems (e.g., server computers, personal computers, workstations, minicomputers, clustered computer systems, or embedded computer systems). Some or all of the server 150 functionality can also be implemented on the mobile device 120 itself.

By tracking the categories of places visited by a user, server 150 can infer the user's interests. For example, if the user frequents places associated with a category labeled "movies," then to the server 150 or computing system may infer that the user enjoys going to the movies. Similarly, if the user frequents "Italian restaurants," then it is safe to infer that the user enjoys Italian food. More specific inferences can be drawn by checking the times at which the visits occur. For example, if the "movies" visits frequently occur on Saturday evenings, it is safe to infer that the user likes to go to the movies on Saturday nights. If the user visits "Italian restaurants" on Sundays at 6:00pm, then it is safe to infer that the user enjoys or has a reason to eat Italian food for dinner on Sundays.

A prediction module of server 150 can sort the visit data into a histogram according to category. This allows the system of server 150 to readily observe patterns in the visit data and make predictions about which types of visits will recur (Italian restaurants at 6:00pm on Sundays for example). Based on such data, the prediction module of server 150 can trigger the serving of a recommendation based on the prediction. In one example, in advance of 6:00pm on a Sunday, the prediction module could determine the user's location, perform a local search for Italian restaurants in the vicinity of the user, and recommend one or more restaurants having good reviews to the user. This recommendation can then be displayed on the user's mobile device 120.

As used throughout this disclosure, the phrase "current location" refers to a location at a particular time. In various instances, mobile device 120 may have physically moved to a different geographic location between the time at which the current location was first determined and the present moment. Even so, the "current location" of mobile device 120 is determined to be the location at which the device was physically located at the moment that the location was last determined. The same "current location" may be used throughout the prediction process even though updated current locations may be determined during the prediction process. In general, a "current location" of mobile device 120 may be any location within a threshold distance surrounding the determined current location. Similarly, the phrase "current time" refers to a particular time at which mobile device 120 determined the "current time" and may be the same time used throughout the prediction process even though the literal current time may change by fractions of a second, a second, or some other amount during the prediction process.

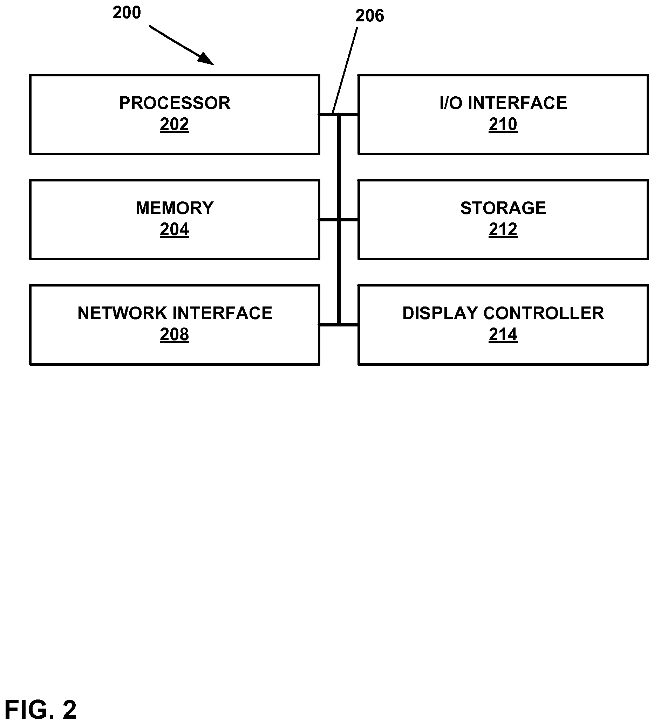

FIG. 2 illustrates an example architecture of a computer system 200 which can be used to implement the mobile device 120 or the server 150 of FIG. 1. Although an example computer system 200 is depicted and described herein, it will be appreciated that this is for sake of generality and convenience. In other examples, the computer system may differ in architecture and operation from that shown and described here.

The illustrated computer system 200 includes a processor 202 which controls the operation of the computer system 200, for example by executing an operating system (OS), device drivers, application programs, and so forth. The processor 202 can include any type of microprocessor or central processing unit (CPU), including programmable general-purpose or special-purpose microprocessors and/or any of a variety of proprietary or commercially-available single or multi-processor systems. The computer system 200 also includes a memory 204, which provides temporary or permanent storage for code to be executed by the processor 202 or for data that is processed by the processor 202. The memory 204 can include read-only memory (ROM), flash memory, one or more varieties of random access memory (RAM), and/or a combination of memory technologies. The various elements of the computer system 200 are coupled to a bus system 206. The illustrated bus system 206 is an abstraction that represents any one or more separate physical busses, communication lines/interfaces, and/or multi-drop or point-to-point connections, connected by appropriate bridges, adapters, and/or controllers.

The computer system 200 also includes a network interface 208, an input/output (I/O) interface 210, a storage device 212, and a display controller 214. The network interface 208 enables the computer system 200 to communicate with remote devices (e.g., other computer systems) over a network. The I/O interface 210 facilitates communication between one or more input devices, one or more output devices, and the various other components of the computer system 200. The storage device 212 can include any conventional medium for storing data in a non-volatile and/or non-transient manner. The storage device 212 can thus hold data and/or instructions in a persistent state (i.e., the value is retained despite interruption of power to the computer system 200). The storage device 212 can include one or more hard disk drives, flash drives, USB drives, optical drives, various media disks or cards, and/or any combination thereof and can be directly connected to the other components of the computer system 200 or remotely connected thereto, such as over a network. The display controller 214 includes a video processor and a video memory, and generates images to be displayed on one or more displays in accordance with instructions received from the processor 202.

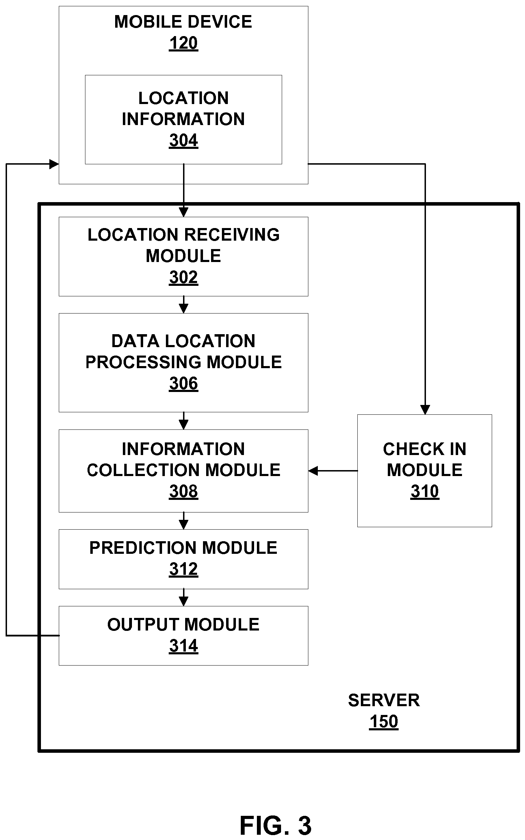

The various functions performed by the server 150 or the mobile device 120 can be logically described as being performed by one or more modules. It will be appreciated that such modules can be implemented in hardware, software, or a combination thereof. It will further be appreciated that, when implemented in software, modules can be part of a single program or one or more separate programs, and can be implemented in a variety of contexts (e.g., as part of an operating system, a device driver, a standalone application, and/or combinations thereof). In addition, software embodying one or more modules can be stored as an executable program on one or more non-transitory computer-readable storage mediums. Functions disclosed herein as being performed by a particular module can also be performed by any other module or combination of modules, and the server 150 or the mobile device 120 can include fewer or more modules than what is shown and described herein. FIG. 3 is a schematic diagram of the modules of one example of the server 150.

In one example, as shown in FIG. 3, the server 150 can include a location data receiving module 302 configured to receive location information 304, e.g., from the mobile device 120. For users who opt in, and in accordance with published privacy policies, the location data can be indicative of the current location of the user.

In some instances, the current location of a user can be inferred from the current location of a mobile device or other object in the user's possession. In the example shown in FIG. 1, the mobile device 120 can be configured to periodically communicate its current location to the location receiving module 300 using the mobile network 100. This can occur several times per minute, once per minute, once per hour, or at any other regular or sporadic time interval. The mobile device 120 can determine or estimate its current location using any of a variety of known techniques, such as by processing GPS signals, by detecting proximity to cell towers, Wi-Fi hot spots, or other mobile access points 130 of known location, or by triangulating between the mobile device 120 and a plurality of such access points 130. One example of a computer program for obtaining a user's current location is a geolocation application programming interface (API). A geolocation API provides information used for giving a best estimate of a user's location using a number of onboard or server-based sources (called location providers).

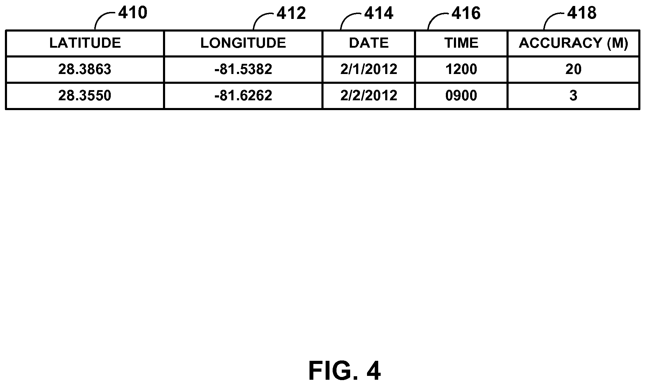

Location history data can be expressed in a variety of manners. As shown in FIG. 4, location history data can take the form of information representing a geographic position and point in time, *e.g.,* a latitude 410, longitude 412, date 414, and time 416. Location history data can also include an accuracy radius 418 that represents an estimate of the accuracy of that location data point. The accuracy radius can range from meters to kilometers, depending on the type of location data. For example, GPS location data can have an accuracy radius of several meters while cellular network tower location data can have an accuracy radius of several kilometers.

In some examples, location information received by the location receiving module 302 can be stored in a memory at various time intervals to provide a location history of the device and the user. An application for determining and recording location information using a user's mobile device may be used. For users who opt in, and in accordance with published privacy policies, such an application can determine and store the location of a user's mobile device to create a location history. This location history can be stored in a cache or other memory on the mobile device, or it can be transmitted to a server over a mobile network and stored in a data store.

In situations herein in which the location receiving module 302 collects or makes use of personal information about the user (e.g., search histories, location, etc.), the user may be provided with an opportunity to control whether location receiving module 302 can collect user information or to control whether and/or how location receiving module 302 may receive content that may be relevant to the user. In addition, location receiving module 302 may treat certain data in one or more ways before it is stored or used by location receiving module 302 so that personally identifiable information is removed. Thus, the user may have control over how information (e.g., data) is collected about the user and used by location receiving module 302 as described herein.

The server 150 can also include a location data processing module 306 configured to process the location data received by the location data receiving module 302. The location server 150 can process and analyze the location history data in a number of ways. For example, raw geographic location history data (such as that shown in FIG. 4) can be processed to generate "visited place" geographic data. For example, location history data can be processed to relate the raw location history data to a visited location by calculating a centroid for a cluster of nearby location history data points. A cluster of location history data points can be defined as a set of location history data points that are physically close to one another and a centroid can be defined as the geographic center of a cluster of such data points. This can be referred to as distance-based clustering. In addition, dates and times can be used to further filter the location history data and produce clusters of data points that are proximate in both space and time. For example, for a plurality of data points gathered during a period when a user is expected to be at home, e.g., during the night, there may be data points that correspond to different locations within the user's house, *e.g.,* the kitchen, bedroom, living room, etc. The location history data for this period may show small variations in latitude and longitude, but would relate to a single place-the home. Accordingly, such points that are close in geography over time can be treated as a cluster that represents a single place. This type of small variation in position over time can be observed when a user visits a variety of types of locations, including tourist attractions, resorts, restaurants, hotels, etc. Clustering by determining a centroid among slightly varying positions can provide a single geographic position to represent the location visited, and can be associated with a time span spent there (*e.g.,* the time spanned from the first to the last location history data point in the cluster). In addition, clustering can aid in reducing variability in the location history data caused by inaccuracies in the location data collection (*e.g*., errors in position acquisition from GPS or other sources).

In addition to determining a centroid as a single geographic position representing a location visited, other processing might include reverse geocode lookups to obtain information about the location, such as an address or a business name. For example, processes known as geocoding and reverse geocoding can be used to convert location data from geographic coordinates to human-readable addresses. Geocoding refers to a process in which a human-readable address, *e.g*., 12345 North Shoreline Boulevard, Mountain View, CA, can be converted to location data in geographic coordinates, *e.g*., latitude 37.423021 and longitude - 122.083739. Reverse geocoding refers to the reverse process, *i.e.,* converting geographic coordinates into an address. One example of a computer program for geocoding and reverse geocoding is a geocoding API. This program can accept geographic coordinates and return a corresponding address, or vice versa. Such information can be stored with the location history data. Alternatively, these processes can be used to reverse geocode the raw location history data points and thereby form clusters-for example, by clustering location history data points that relate to a single address. This can be referred to as address-based clustering.

The data represented by the clustering processes discussed above can take the form of a longitude, latitude, start time, and end time, where the longitude and the latitude are for the centroid and the start and end times represent the time span over which the user was present in a particular place. The clustered location history data may also include a radius that can reflect inaccuracies in the location measurement, movement of the person within the cluster, or both. In addition, the data can reflect multiple visits to the same place within a user's location history data. In such an example, the data can include a vector of visit times, with each visit time including a start time and end time pair.

The server 150 can also include an information collection module 308 configured to collect information about the place near the current location. Collecting information about locations visited by a user can include conducting a local search using a geographic location from a user's location history data, such as a centroid calculated from the raw location history data points. In one example, a geographic location can include at least a position and a time. In some examples, the geographic location can also include a radius, or distance from the position. This radius can be derived from accuracy information relating to the technique for acquiring the geographic location, or it could be based upon variation in position within a cluster. Alternatively, a preselected value for the radius can be used. The purpose of conducting a local search is to return destinations that are proximate to the geographic location. In general, destinations and attractions are businesses, addresses, or other mappable features that can represent places that might have been visited by the user.

The local search can be conducted on a local search engine. Local search engines are search engines that attempt to return business listings and/or relevant web pages within a specific geographical area. For a local search, a user may enter a search query and specify a geographical area near which the search query is to be performed. The local search engine can return to the user relevant results, such as listings of businesses and destinations in the geographical area and/or relevant web pages pertaining to the geographical area.

In one example, the local search can be conducted by making a call to a local search engine with the geographic location from the user's location history data and a radius in which the search is to be performed. For example, the local search might be conducted for a latitude and longitude, along with a radius, such as, for example, 200 meters. The latitude and longitude are generally a point or the centroid of a cluster from the user's location history data. The radius may be calculated as described above, or it might be preselected, such as 200 meters. The 200 meter radius can be helpful if the expected accuracy in the location history data is on the order of 100 meters. In this way, one can be confident that the user's actual destination is within the area searched as part of the local search.

The local search can also return a category for each destination located. For example, a restaurant might return a category of "food," while a theater might return a category of "theater" or "arts." In some examples, the categories of results returned can be limited to provide the most likely type of location visited. For example, if a user is determined to be traveling away from home (*e.g*., using the techniques described below), local search result categories relating to tourist attractions, restaurants, hotels, etc. can be provided exclusively, or at least prioritized above listings for offices, local businesses, etc. that may nearby the travel-related destinations.

Information collection can also include determining whether or not a location visited by a user is more than a certain distance away from a home location associated with the user. This determination can be used to decide if the user is traveling, or if the user is simply going about normal commuting activities near his or her home location. In certain examples, it may be desirable to exclude data representing the user's activities or locations while traveling. To determine if a user is at least a distance away from an associated home location, a distance can be calculated between a geographic position of a location visited (*e.g*., a position of a centroid, an address reverse geocoded from such a position, a position of a destination returned from a local search, etc.) and a geographic position of an associated home location. The home location associated with a user can be preset by the user, or can be determined based on analysis of location history data associated with the user. Any desired distance value can be used in this determination, but the value should preferably be large enough to exclude the daily travels of most users. For example, setting the distance value below about 10 miles would likely continue to include the daily commuting activities of users going to work, grocery stores, etc. By setting the distance value high enough to exclude such activities, information on locations visited can be limited to locations visited by users when traveling away from home (*e.g*., when on vacation). Personal travel displays regarding these types of travels can be more desirable to users than displays detailing their normal routine. For example, the distance threshold can be about 200 miles.

In some examples, the information collection module 308 can collect information by conducting an internet search using the name of the place as a query. For example, the information collection module 308 can query an Internet search engine. The search results can include, for example, a place page that includes various information about the place near the current location such as relevant URLs, descriptive information about the place, e.g., text description, telephone numbers, maps, and pictures.

In some instances, the information collection module can retrieve information from the local search results corresponding to the place near the current location. For example, in addition to the name of a place near the current location, the local search can return information about events happening at the place. The event information can include, for example, one or more of a name of the event, a textual description of the event, and a URL pointing to details about the event.

The information collected by the information module 304 can also include ratings for the place, ratings for the place, historical visit information about the place, related search terms about the place, and data provided by other users. For example, the data provided by other users can include one or more of reviews, alerts, and tips related to the nearby place. In some examples, the information can include information provided by the user's friends, e.g., other users in the user's social network, about the nearby place. For example, the information can include posts made near the place by the user's friends on a social network.

The user's location can also be determined from other sources, such as when a user "checks in" using a check in module 310 at a location using any of a number of social applications that provide for such check-ins, when the user indicates their current position by dropping a pin at a particular location or making an equivalent selection using mapping software, or when the user responds to a prompt for their current position.

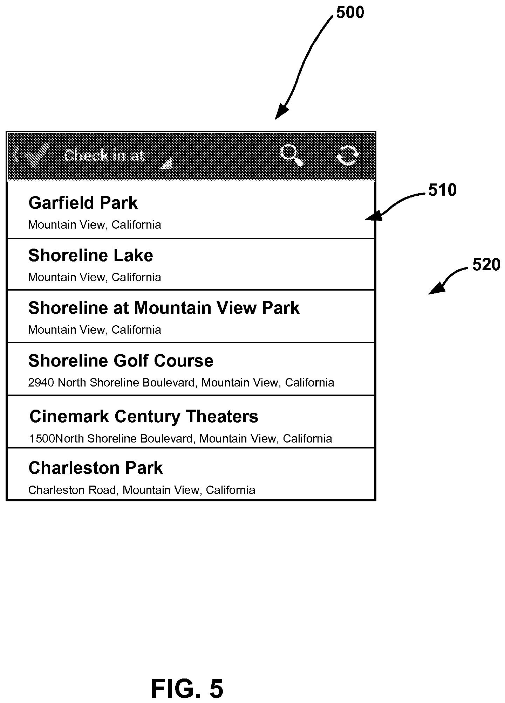

FIG. 5 is a schematic diagram illustrating an example check in screen 500 for a social application running on a mobile device 120 such as a smart phone is illustrated. In this example, a user is attempting to check in at a destination in Mountain View, California. The application, in this case running on a mobile device, provides the user with a list of destinations based upon the user's geographical location as measured on the mobile device. The closest destination 510 is listed at the top, with a list 520 of next nearest destinations provided below. The user can select one of these destinations in order to check in. This provides one example as to how a user might check in at a location which can then be used by server 150. The location at which the user checked in can then be searched for information in the same way as other location information is searched in the information collection module 308 above.

It should also be appreciated that the location data received by the information collection module 308 need not necessarily be indicative of the user's current location. Rather, the user can also provide some other location, such as a location that the user has visited in the past or plans to visit in the future, in order to obtain maps history information relevant to that location.

Server 150 can include algorithms that predict when the user will visit a particular category of business for the purpose of providing a timely recommendation. In one example, a prediction module 312 builds a histogram based upon the user's location history. Prediction module 312 builds the histogram across the categories of the places visited. In this way, prediction module 312 can readily check the data for categories that the user visits regularly. Prediction module 312 can use this information for predictive purposes (e.g., the user visits Italian Restaurants on Sundays at 6:00pm), or prediction module 312 can use the information to build a profile of the user for delivering relevant recommendations to that user.

Within the histogram, the data can include a time and date, the category, and a score that is indicative at least of a number of visits. The histogram can be based on a weekly pattern. While other time frames can be used, many users have schedules that run on a weekly basis and a week can serve as a convenient timeframe. In addition, the weekly histogram can be broken up into timeslots. For example, the week may be broken up into two hour timeslots. In this example, each two hour timeslot can act like a bucket that stores the categories of businesses that a user visits during that timeslot. If one timeslot represented Monday mornings from 9:00am to 11:00am, this bucket would collect all of the data for visits made during this time. For one week, there may only be a small sample of data, but where the data is built up over a number of weeks, if a particular timeslot is popular with a particular user for a particular category, this circumstance can be determined from the histogram data. The data might show that a particular user frequents coffee shops in this timeslot, or carwashes, or some other category of business. As explained below, prediction module 312 can then use this data to trigger recommendations for categories that are popular in a particular timeslot in advance of that timeslot's next occurrence - for example, in advance of Monday morning at 9:00am.

The data used by prediction module 312 to build the histogram can also be based on local activities. That is, as explained above, data that is likely to be based on a user traveling away from home can be excluded when building the histograms. For example, a user from New York who often eats at Italian restaurants on Sundays may be travelling to Tennessee on a given Sunday and choose to eat at a barbeque restaurant. This choice is likely to be the result of the user's travels and not a change in preference - accordingly, this data can be excluded when attempting to predict what the user might eat on another Sunday near home.

The user's search history (such as the queries submitted by the user and the search results selected by the user) is also a good source for determining the user's interests. Where the user opts in, and subject to published privacy restrictions, the user's search history, stored for example, in a query log database, can be accessed to determine a user's search interests. Where the user searches for, and selects search results, that fall into a category that corresponds to a category covered by the histogram, the histogram can reflect such searches by including a search history field in the histogram data for the category to reflect the number of searches or selections within a given category.

On example trigger for generating a recommendation is based on time. Where the histogram data shows a tendency to visit Italian restaurants at 6:00pm on Sundays, the prediction module 312 can provide a recommendation for a locationally appropriate Italian restaurant in advance of 6:00pm on Sunday. As another example, where the histogram data shows that the user tends to go to movie theaters on Saturday evenings, the prediction module 312 can provide a recommendation for a nearby movie having good reviews on Saturday afternoon.

Prediction module 312 can draw the recommendations from a database of such recommendations. The prediction module 312 can combine information from the histograms with a database of recommendations entries. An entry can be a piece of information that can be bundled with potential actions that may be relevant to the user. Types of entries may include, for example:
- Movies
- Restaurants
- Night clubs
- Comedy clubs
- Hiking trails
- Biking routes
- Parks
- Attractions (zoo, museum, etc)

In one example, recommendation entries can include:
1) Text describing the subject of the recommendation for the user;
2) One or more categories to which the recommendation belongs (e.g., food, fun activities, emergency alerts);
3) An action that is selectable by the user to engage the recommendation (e.g., an application to run, or a URL to show);
4) A location or area where the recommendation is valid; and
5) A time range when the recommendation is valid.
Information included with the recommendation can include ratings for the recommendation, historical visit information about the recommendation, related search terms about the recommendation, and data provided by other users. For example, the data provided by other users can include one or more of reviews, alerts, and tips related to the recommendation. In some examples, the information can include information provided by the user's friends, e.g., other users in the user's social network, about the recommendation. For example, the information can include posts made near the place by the user's friends on a social network.

Prediction module 312 can compare timely entries from relevant categories to the histogram data in order to generate relevant recommendations for the user. For example, if a user has a strong signal for visiting movie theaters on Saturdays, and an entry of type "movies" indicates that a new movie having good reviews is playing in cinemas near a user's home location, the prediction module 312 can flag that entry as being relevant to the user and can deliver the recommendation to the user at an appropriate time for use on the next Saturday during the relevant timeslot.

Prediction module 312 can also generate recommendations by performing a local search as described above. For example, where the histogram data shows that a user visits Italian restaurants in a 6:00pm time slot on Sundays, the system can perform a local search in advance of 6:00pm on a Sunday in a radius around the user's current location for the Italian restaurant category to discover recommendations for the user. Where the local search turns up proximate results in the relevant category, especially if those results have associated with them good reviews from other users or from professional sources, prediction module 312 can provide such results to the user as recommendations.

At least one of the server 150 or the mobile device 120 can also include an output module 314 configured to generate a notification or other output based on determinations made by the prediction module 312. For example, the output module 314 can send a text message, email, or push notification to the user's mobile device that includes current ranking results. By way of further example, the output module 314 can output an instruction that instructs the user's mobile device to display an option or a prompt to the user. Outputs generated by the output module 314 can be sent as data transmissions via the mobile network 100 to the mobile device 120, which can in turn be configured to display or otherwise present the output to the user. The presentation to the user can be in a standalone application, a device home screen, a native application, or in any other program executed on the mobile device. For example, outputs generated by the output module 314 can be displayed in an information bar within a mobile application executed on the user's mobile device 120. Updated recommendations can be provided by the prediction module 312 to update the display and keep the recommendations current. The output module 314 can also be configured to push alerts to the user's mobile device.

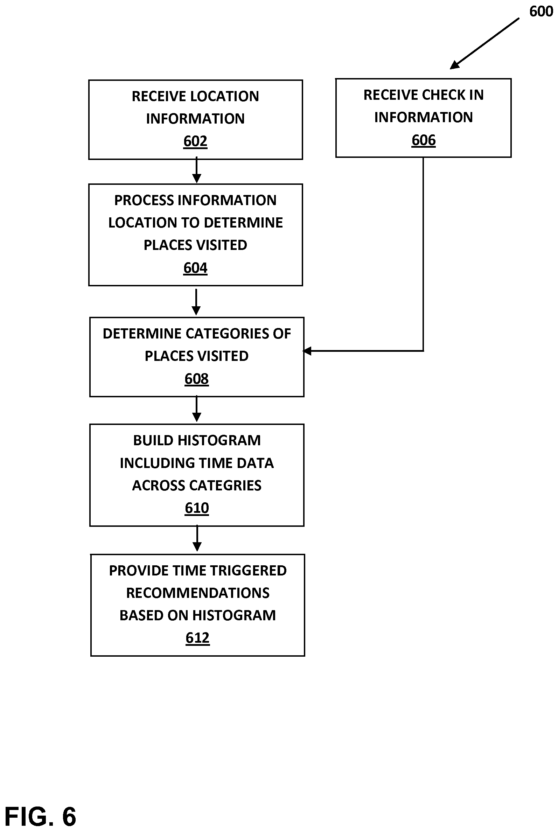

FIG. 6 is a flowchart that schematically depicts example operations for inferring user interests and providing recommendations. While various examples disclosed herein may be shown in relation to a flowchart or flowcharts, it should be noted that any ordering of steps implied by such flowcharts or the description thereof is not to be construed as limiting to performing the steps in that order. Rather, the various steps of each of the examples disclosed herein can be performed in any of a variety of sequences. In addition, as the illustrated flowchart(s) are merely examples, various other examples that include additional steps or include fewer steps than illustrated are also within the scope of the present disclosure. In addition, the steps, generally performed by one or more computer systems programmed to carry out the steps, may be performed by, for example, server 150 or mobile device 120 without limitation - though the final display of recommendations may occur on the mobile device.

The example of FIG. 6, which in some examples can be executed by the server 150, can begin with either of two steps that may occur simultaneously and/or continuously (where continuously includes by running batch analyses at regular or irregular intervals). At step 602, location information is received. The mobile device 120 can determine or estimate its current location using any of a variety of known techniques, such as by processing GPS signals, by detecting proximity to cell towers, Wi-Fi hot spots, or other mobile access points 130 of known location, or by triangulating between the mobile device 120 and a plurality of such access points 130. Information representing a geographic position and point in time, *e.g.,* a latitude, longitude, date, and time, and can be stored in a data store associated with server 150.

The location information is processed in step 604 to determine the places visited by the user. For example, location history data can be processed to relate the raw location history data to a visited location by calculating a centroid for a cluster of nearby location history data points. A cluster of location history data points can be defined as a set of location history data points that are physically close to one another and a centroid can be defined as the geographic center of a cluster of such data points. This can be referred to as distance-based clustering. In addition, dates and times can be used to further filter the location history data and produce clusters of data points that are proximate in both space and time. In another example, reverse geocoding on the location history data can be used for address based clustering. The result of the processing is the determination of a visit having a defined geography and time.

An alternate technique for determining visited places data is to receive check in data from the user as illustrated in step 606. A user might "check in" at a location using any of a number of social applications that provide for such check-ins, when the user indicates their current position by dropping a pin at a particular location or making an equivalent selection using mapping software, or when the user responds to a prompt for their current position. The time of the check in can be used as the visit time, and a current location taken from the mobile device, or a reverse geocode lookup on the address of a location checked in at can provide a geographic reference for the user's visit.

In step 608, categories for the places visited are determined. In one example, categories are determined by performing a local search. The local search can be conducted by making a call to a local search engine with the geographic location from the user's location history data and a radius in which the search is to be performed. For example, the local search might be conducted for a latitude and longitude, along with a radius. The purpose of conducting a local search is to return destinations that are proximate to the geographic location. In general, destinations and attractions are businesses, addresses, or other mappable features that can represent places that might have been visited by the user. The local search can also return a category for each destination located. For example, a restaurant might return a category of "food," while a theater might return a category of "theater" or "arts."

A histogram is built in step 610. The histogram is built across the categories of the places visited. In this way, the data can readily be checked for categories that the user visits regularly. This information can be used for predictive purposes (e.g., the user visits Italian restaurants on Sundays at 6:00pm), or it can be used to build a profile of the user for delivering relevant recommendations to that user. Within the histogram, the data can include a time and date, the category, and a score that is indicative at least of a number of visits. The histogram can be based on a weekly pattern. While other time frames can be used, many users have schedules that run on a weekly basis and a week can serve as a convenient timeframe.

User search history can also inform the histogram. Where the user searches for, and selects search results, that fall into a category that corresponds to a category covered by the histogram, the histogram can reflect such searches by including a search history field in the histogram data for the category to reflect the number of searches or selections within a given category.

In some examples, the histogram is limited to data from a time when the user is local, and not traveling away from home.

In step 612, time triggered recommendations based on the histogram are provided. The trigger for generating a recommendation is based on time. Where the histogram data shows a tendency to visit Italian restaurants at 6:00pm on Sundays, the prediction module 312 can provide a recommendation for a locationally appropriate Italian restaurant in advance of 6:00pm on Sunday. As another example, where the histogram data shows that the user tends to go to movie theaters on Saturday evenings, the prediction module can provide a recommendation for a nearby movie having good reviews on Saturday afternoon.

The recommendations can then be shown to the user. Where recommendations are to be displayed on a user's mobile device, screen space can be limited and the recommendations may be displayed as alerts, in a status bar, and/or as a recommendations page that might be generated on user request. In any event, screen space is likely to be limited, and it can be important to limit the display to recommendations that the user might find to be relevant and timely. In the disclosed examples, the system presents highly relevant, timely, and geographically compatible recommendations to the user

In some examples, some or all of the functionality disclosed above as being performed by the server 150 can instead be performed by the mobile device 120. The structure and function of the mobile device can be substantially similar to that of the server of FIG. 2, except as noted herein and as will be readily apparent to those having ordinary skill in the art. Accordingly, a detailed description thereof is omitted here for the sake of brevity.

The mobile device can include a location determining module configured to estimate the current location of the mobile device, for example using GPS or access point triangulation. The mobile device can also include a display module configured to display a recommendation served to it, for example on a display screen of the mobile device.

In some examples, a technique includes receiving, by a computing system (e.g., server 150), location history indicating a plurality of locations at which the mobile computing device was present and, for each respective location from the plurality of locations, a respective time at which the mobile computing device was present at the respective location, and generating, by the computing system, based on the location history, a histogram representing a number of visits over time for each of one or more location categories, wherein each location from the plurality of locations is associated with at least one of the one or more location categories. The technique also includes automatically generating, by the computing system, based on the histogram, a recommendation associated with a location category from the one or more location categories represented on the histogram, and sending, by the computing system, to the mobile computing device, the recommendation.

In some examples, the technique includes automatically generating the recommendation is based at least in part on the respective times at which the mobile computing device was present at those locations of the plurality of locations within the location category.

In some examples, the technique includes generating the location history at least in part by clustering locations for the mobile computing device to identify a single geographic position representing a visited location.

In some examples, the technique includes performing a local search within a specific geographical area to determine a location category for a location from the plurality of locations. In some examples, receiving location history includes receiving check-in data representing a user indication that a user of the mobile computing device has visited a particular place. In some examples, generating the histogram includes sorting the plurality of locations by location category and sorting the plurality of locations by, for each location category, 1) a number of visits to locations from the plurality of locations that are within the respective location category and 2) a respective time at which the mobile computing device was present at each location from the plurality of locations this is within the respective location category.

In some examples, generating the histogram includes sorting the locations at which the mobile computing device was present based on a timeframe of a week. In some examples, the technique includes assigning the locations at which the mobile computing device was present to two hour timeslots of the histogram within the week.

In some examples, automatically generating the recommendation includes determining a current location of the mobile computing device and performing a local search within a specific geographical area, based on the current location, for places within a location category for recommendation. In some examples, the technique includes reviewing a query log database associated with a user of the mobile computing device to determine user searches and selections of search results that fall into a location category represented on the histogram, and adding data to the histogram indicating a number of searches and a number of selections of search results that fall into the location category.

In some examples, the technique includes filtering the plurality of locations to include locations that are within a threshold distance from a user's home location and to exclude locations that are greater than the threshold distance from the user's home location, wherein generating the histogram comprises generating the histogram based on the filtering.

In some examples, automatically generating the recommendation comprises determining a current location of the mobile computing device and performing a local search based on the current location for places within a location category for recommendation.

In some examples, a computing system (e.g., server 150) includes at least one processor, and at least one module operable by the at least one processor to receive location history indicating a plurality of locations at which the mobile computing device was present and, for each respective location from the plurality of locations, a respective time at which the mobile computing device was present at the respective location; generate, based on the location history, a histogram representing a number of visits over time for each of one or more location categories, wherein each location from the plurality of locations is associated with at least one of the one or more location categories; and automatically generate, based on the histogram, a recommendation associated with a location category from the one or more location categories represented on the histogram.

In some examples, the at least one module is further operable by the at least one processor to send, to the mobile computing device, the recommendation. In some examples, the at least one module is further operable by the at least one processor to perform a local search to determine a location category for a location from the plurality of locations.

In some examples, the at least one module is further operable by the at least one processor to filter the plurality of locations to include locations that are within a threshold distance from a user's home location and to exclude locations that are greater than the threshold distance from the user's home location, wherein generating the histogram comprises generating the histogram based on the filtering.

In some examples, the at least one module is further operable by the at least one processor to assign the locations at which the mobile computing device was present to two hour timeslots of the histogram within the week. In some examples, the at least one module is further operable by the at least one processor to review a query log database associated with a user of the mobile computing device to determine user searches and selections of search results that fall into a location category that corresponds to a location category represented on the histogram, and to add data to the histogram indicating a number of searches and a number of selections of search results that fall into the location category.

In some examples, a computer-readable storage medium (e.g., of server 150) stores instructions that, when executed, cause at least one processor of a computing device (e.g., server 150) to receive location history indicating a plurality of locations at which the mobile computing device was present and, for each respective location from the plurality of locations, a respective time at which the mobile computing device was present at the respective location; generate, based on the location history, a histogram representing a number of visits over time for each of one or more location categories, wherein each location from the plurality of locations is associated with at least one of the one or more location categories; automatically generate, based on the histogram, a recommendation associated with a location category from the one or more location categories represented on the histogram; and send, to the mobile computing device, the recommendation.

In some examples, the instructions further cause the at least one processor of the computing device to perform a local search within a specific geographical area to determine a location category for a location from the plurality of locations. In some examples, the instructions further cause the at least one processor of the computing device to filter the plurality of locations to include locations that are within a threshold distance from a user's home location and to exclude locations that are greater than the threshold distance from the user's home location, wherein generating the histogram comprises generating the histogram based on the filtering.

In some examples, the instructions further cause the at least one processor of the computing device to review a query log database associated with a user of the mobile computing device to determine user searches and selections of search results that fall into a location category that corresponds to a location category represented on the histogram, and adding data to the histogram indicating a number of searches and a number of selections of search results that fall into the location category.

Various examples have been described in this disclosure. These and other examples are within the scope of the following claims.

## Claims

1. A method comprising:
receiving (602), by a computing device (120, 200), location history indicating a plurality of locations at which a mobile computing device was present and, for each respective location from the plurality of locations, a respective time at which the mobile computing device was present at the respective location, wherein each location from the plurality of locations is associated with at least one of one or more location categories, each of the one or more location categories specifying a respective type of location;
filtering the plurality of locations of the location history to exclude locations that are greater than a threshold distance from the user's home location;
generating (610), by the computing device, based on the filtered location history, a histogram representing a number of instances, over time, at which the mobile computing device was present at respective locations associated with respective location categories from the one or more location categories;
responsive to automatically determining a current location of the mobile computing device:
automatically selecting, based on the current location, one or more places within a particular location category from the one or more location categories represented within the histogram;
automatically generating, by the computing device, based on the histogram, a recommendation associated with the particular location category, wherein the recommendation includes the one or more places within the particular location category selected based on the current location; and
sending, by the computing device, to a computing device associated with a user, information associated with the recommendation.

2. The method of claim 1, wherein automatically generating the recommendation further comprises:
responsive to determining a current time of day:
selecting, based at least in part on: the current time of day, the histogram, and the respective times at which the mobile computing device was present at those locations of the plurality of locations associated with each respective location category from the one or more location categories, the particular location category from the one or more location categories; and
automatically generating the recommendation, wherein the recommendation indicates a particular location associated with the selected location category.

3. The method of claim 1, further comprising:
generating the location history at least in part by clustering locations at which the mobile computing device was present so as to identify a single geographic position representing a single location, based on the clustered locations, at which the mobile computing device was present.

4. The method of claim 1, further comprising:
performing a local search based on a specific geographical area to determine a location category for a particular location from the plurality of locations.

5. The method of claim 1, wherein generating the histogram includes sorting the plurality of locations by location category and sorting the plurality of locations by, for each respective location category, 1) a number of instances at which the mobile computing device was present at respective locations from the plurality of locations associated with the respective location category and 2) a respective time at which the mobile computing device was present at each location from the plurality of locations associated with the particular location category.

6. The method of claim 1, wherein generating the histogram includes sorting the locations at which the mobile computing device was present based on a timeframe of a week.

7. The method of claim 1, wherein automatically generating the recommendation comprises performing a local search within a specific geographical area, based on the current location, for places within a location category for recommendation.

8. The method of claim 1, further comprising:
reviewing a query log database associated with the user of the mobile computing device to determine user searches and selections of search results that fall into at least one location category from the plurality of location categories represented within the histogram, and
adding data to the histogram indicating a number of searches and a number of selections of search results that fall into the at least one location category.

9. The method of claim 1, wherein the computing device associated with the user comprises a computing device associated with a user of the mobile computing device.

10. The method of claim 9, wherein receiving location history comprises receiving (606) check-in data representing a user indication that the user of the mobile computing device was present at a particular place.

11. The method of claim 1, wherein the computing device associated with the user comprises the mobile computing device.

12. The method of claim 1, further comprising:
selecting, based at least in part on the histogram, the particular location category from the one or more location categories,
wherein automatically generating a recommendation comprises,
automatically generating the recommendation for the one or more places within the particular location category, and
wherein sending information associated with the recommendation comprises sending information associated with the one or more places within the particular location category.

13. A computing device (120, 200) comprising:
at least one processor (202); and
at least one module (302-314) operable by the at least one processor to:
receive (602) location history indicating a plurality of locations at which a mobile computing device was present and, for each respective location from the plurality of locations, a respective time at which the mobile computing device was present at the respective location, wherein each location from the plurality of locations is associated with at least one of the one or more location categories, each of the one or more location categories specifying a respective type of location;
filter the plurality of locations of the location history to exclude locations that are greater than a threshold distance from the user's home location;
generate (610), based on the location history, a histogram representing a number of instances, over time, at which the mobile computing device was present at respective locations associated with respective location categories from the one or more location categories;
responsive to automatically determining a current location of the mobile computing device:
automatically select, based on the current location, one or more places within a particular location category from the one or more location categories represented within the histogram; and
automatically generate, based on the histogram, a recommendation associated with the particular location category, wherein the recommendation includes the one or more places within the particular location category selected based on the current location.

14. A non-transitory computer-readable storage medium storing instructions that, when executed, cause at least one processor (202) of a computing device (120. 200) to:
receive (602) location history indicating a plurality of locations at which a mobile computing device was present and, for each respective location from the plurality of locations, a respective time at which the mobile computing device was present at the respective location, wherein each location from the plurality of locations is associated with at least one of the one or more location categories, each of the one or more location categories specifying a respective type of location;
filter the plurality of locations of the location history to exclude locations that are greater than a threshold distance from the user's home location;
generate (610), based on the location history, a histogram representing a number of instances, over time, at which the mobile computing device was present at respective locations associated with respective location categories from the or more location categories;
responsive to automatically determining a current location of the mobile computing device:
automatically select, based on the current location, one or more places within a particular location category from the one or more location categories represented within the histogram;
automatically generate, based on the histogram, a recommendation associated with the particular location category, wherein the recommendation includes the one or more places within the particular location category selected based on the current location; and
send, to a computing device associated with a user, information associated with the recommendation.

## Patentansprüche

1. Verfahren, umfassend:
Empfangen (602), durch ein Computergerät (120, 200), von Standortverlauf, der eine Vielzahl von Standorten anzeigt, an denen sich ein mobiles Computergerät befunden hat, und, für jeden entsprechenden Standort aus der Vielzahl von Standorten, eine entsprechende Zeit, zu der sich das mobile Computergerät am entsprechenden Standort befunden hat, wobei jeder Standort aus der Vielzahl von Standorten zumindest mit einer von einer oder mehreren Standortkategorien assoziiert ist, wobei jede der einen oder mehreren Standortkategorien einen entsprechenden Standorttyp angibt;
Filtern der Vielzahl von Standorten des Standortverlaufs, um Standorte auszuschließen, die weiter als ein Schwellenwertabstand vom Heimatstandort des Benutzers entfernt sind;
Erzeugen (610), durch das Computergerät, basierend auf dem gefilterten Standortverlauf, eines Histogramms, das, im Verlauf der Zeit, eine Anzahl an Instanzen darstellt, in denen sich das mobile Computergerät an entsprechenden Standorten befunden hat, die mit entsprechenden Standortkategorien der einen oder den mehreren Standortkategorien assoziiert sind;
in Reaktion auf das automatische Ermitteln eines aktuellen Standorts des mobilen Computergeräts:
automatisches Auswählen, basierend auf dem aktuellen Standort, eines oder mehrerer Orte innerhalb einer bestimmten Standortkategorie der einen oder mehreren Standortkategorien, die innerhalb des Histogramms dargestellt sind;
automatisches Erzeugen, durch das Computergerät, basierend auf dem Histogramm, einer Empfehlung, die mit der bestimmten Standortkategorie assoziiert ist, wobei die Empfehlung den einen oder die mehreren Orte innerhalb der bestimmten Standortkategorie beinhaltet, die basierend auf dem aktuellen Standort ausgewählt wurde; und
Senden, durch das Computergerät, von Informationen, die mit der Empfehlung assoziiert sind, an ein Computergerät, das mit einem Benutzer assoziiert ist.

2. Verfahren nach Anspruch 1, wobei das automatische Erzeugen der Empfehlung ferner Folgendes umfasst:
in Reaktion auf das Ermitteln einer aktuellen Tageszeit:
Auswählen, basierend zumindest teilweise auf: der aktuellen Tageszeit, dem Histogramm und den entsprechenden Zeiten, zu denen sich das mobile Computergerät an diesen Standorten der Vielzahl von Standorten befunden hat, die mit jeder entsprechenden Standortkategorie aus der einen oder den mehreren Standortkategorien assoziiert sind, der bestimmten Standortkategorie aus der einen oder den mehreren Standortkategorien; und
automatisches Erzeugen der Empfehlung, wobei die Empfehlung einen bestimmten Standort anzeigt, der mit der ausgewählten Standortkategorie assoziiert ist.

3. Verfahren nach Anspruch 1, ferner umfassend:
Erzeugen des Standortverlaufs zumindest teilweise durch Clustering von Standorten, an denen sich das mobile Computergerät befunden hat, um, basierend auf den Clusterstandorten, an denen sich das mobile Computergerät befunden hat, eine einzelne geografische Position zu identifizieren, die einen einzelnen Standort darstellt.

4. Verfahren nach Anspruch 1, ferner umfassend:
Ausführen einer lokalen Suche basierend auf einem spezifischen geografischen Bereich, um eine Standortkategorie für einen bestimmten Standort aus der Vielzahl von Standorten zu ermitteln.

5. Verfahren nach Anspruch 1, wobei das Erzeugen des Histogramms das Sortieren der Vielzahl von Standorten nach Standortkategorie und das Sortieren der Vielzahl von Standorten nach, für jede jeweilige Standortkategorie, 1) einer Anzahl an Instanzen, in denen sich das mobile Computergerät an entsprechenden Standorten aus der Vielzahl von Standorten, die mit der entsprechenden Standortkategorie assoziiert sind, befunden hat, und 2) einer entsprechenden Zeit, zu der sich das mobile Computergerät an jedem Standort aus der Vielzahl von Standorten, die mit der bestimmten Standortkategorie assoziiert sind, befunden hat, beinhaltet.

6. Verfahren nach Anspruch 1, wobei das Erzeugen des Histogramms das auf einem Zeitrahmen einer Woche basierende Sortieren der Standorte, an denen sich das mobile Computergerät befunden hat, beinhaltet.

7. Verfahren nach Anspruch 1, wobei das automatische Erzeugen der Empfehlung das Ausführen einer lokalen Suche innerhalb eines spezifischen geografischen Bereichs, basierend auf dem aktuellen Standort, für Orte innerhalb einer Standortkategorie zur Empfehlung umfasst.

8. Verfahren nach Anspruch 1, ferner umfassend:
Überprüfen einer Anfrageprotokolldatenbank, die mit dem Benutzer des mobilen Computergeräts assoziiert ist, um Benutzersuchen und Auswahlen von Suchergebnissen zu ermitteln, die in zumindest eine Standortkategorie aus der Vielzahl von Standortkategorien fallen, die innerhalb des Histogramms dargestellt sind, und
Hinzufügen von Daten zum Histogramm, die eine Anzahl an Suchen und eine Anzahl an Auswahlen von Suchergebnissen anzeigen, die in die zumindest eine Standortkategorie fallen.

9. Verfahren nach Anspruch 1, wobei das mit dem Benutzer assoziierte Computergerät ein mit einem Benutzer des mobilen Computergeräts assoziiertes Computergerät umfasst.

10. Verfahren nach Anspruch 9, wobei das Empfangen von Standortverlauf das Empfangen (606) von Check-in-Daten umfasst, die eine Benutzeranzeige darstellen, dass sich der Benutzer des mobilen Computergeräts an einem bestimmten Ort befunden hat.

11. Verfahren nach Anspruch 1, wobei das mit dem Benutzer assoziierte Computergerät das mobile Computergerät umfasst.

12. Verfahren nach Anspruch 1, ferner umfassend:
Auswählen, zumindest teilweise basierend auf dem Histogramm, der bestimmten Standortkategorie aus der einen oder den mehreren Standortkategorien,
wobei das automatische Erzeugen einer Empfehlung Folgendes umfasst:
automatisches Erzeugen der Empfehlung für den einen oder die mehreren Orte innerhalb der bestimmten Standortkategorie, und
wobei das Senden von Informationen, die mit der Empfehlung assoziiert sind, das Senden von Informationen umfasst, die mit der einen oder den mehreren Stellen innerhalb der bestimmten Standortkategorie assoziiert sind.

13. Computergerät (120, 200), umfassend:
zumindest einen Prozessor (202); und
zumindest ein Modul (302-314), das durch den zumindest einen Prozessor ausführbar ist, um:
Standortverlauf zu empfangen (602), der eine Vielzahl von Standorten anzeigt, an denen sich ein mobiles Computergerät befunden hat, und, für jeden entsprechenden Standort aus der Vielzahl von Standorten, eine entsprechende Zeit, zu der sich das mobile Computergerät am entsprechenden Standort befunden hat, wobei jeder Standort aus der Vielzahl von Standorten zumindest mit einer der einen oder mehreren Standortkategorien assoziiert ist, wobei jede der einen oder mehreren Standortkategorien einen entsprechenden Standorttyp angibt;
die Vielzahl von Standorten des Standortverlaufs zu filtern, um Standorte auszuschließen, die weiter als ein Schwellenwertabstand vom Heimatstandort des Benutzers entfernt sind;
basierend auf dem Standortverlauf, ein Histogramm zu erzeugen (610), das eine Anzahl an Instanzen, im Verlauf der Zeit, darstellt, in denen sich das mobile Computergerät an entsprechenden Standorten befunden hat, die mit entsprechenden Standortkategorien aus der einen oder den mehreren Standortkategorien assoziiert sind;
in Reaktion auf das automatische Ermitteln eines aktuellen Standorts des mobilen Computergeräts:
basierend auf dem aktuellen Standort, einen oder mehrere Orte innerhalb einer bestimmten Standortkategorie aus der einen oder den mehreren Standortkategorien, die innerhalb des Histogramms dargestellt sind, auszuwählen; und
basierend auf dem Histogramm, automatisch eine Empfehlung zu erzeugen, die mit der bestimmten Standortkategorie assoziiert ist, wobei die Empfehlung den einen oder die mehreren Orte innerhalb der bestimmten Standortkategorie beinhaltet, die basierend auf dem aktuellen Standort ausgewählt wurde.

14. Nicht flüchtiges, computerlesbares Speichermedium, das Anweisungen speichert, die bei Ausführung zumindest einen Prozessor (202) eines Computergeräts (120, 200) veranlassen:
Standortverlauf zu empfangen (602), der eine Vielzahl von Standorten anzeigt, an denen sich ein mobiles Computergerät befunden hat, und, für jeden entsprechenden Standort aus der Vielzahl von Standorten, eine entsprechende Zeit, zu der sich das mobile Computergerät am entsprechenden Standort befunden hat, wobei jeder Standort aus der Vielzahl von Standorten zumindest mit einer der einen oder mehreren Standortkategorien assoziiert ist, wobei jede der einen oder mehreren Standortkategorien einen entsprechenden Standorttyp angibt;
die Vielzahl von Standorten des Standortverlaufs zu filtern, um Standorte auszuschließen, die weiter als ein Schwellenwertabstand vom Heimatstandort des Benutzers entfernt sind;
basierend auf dem Standortverlauf, ein Histogramm zu erzeugen (610), das, im Verlauf der Zeit, eine Anzahl an Instanzen darstellt, in denen sich das mobile Computergerät an entsprechenden Standorten befunden hat, die mit entsprechenden Standortkategorien aus der einen oder den mehreren Standortkategorien assoziiert sind;
in Reaktion auf das automatische Ermitteln eines aktuellen Standorts des mobilen Computergeräts:
basierend auf dem aktuellen Standort, einen oder mehrere Orte innerhalb einer bestimmten Standortkategorie der einen oder mehreren Standortkategorien, die innerhalb des Histogramms dargestellt sind, auszuwählen;
basierend auf dem Histogramm, automatisch eine Empfehlung zu erzeugen, die mit der bestimmten Standortkategorie assoziiert ist, wobei die Empfehlung den einen oder die mehreren Orte innerhalb der bestimmten Standortkategorie beinhaltet, die basierend auf dem aktuellen Standort ausgewählt wurde; und
Informationen, die mit der Empfehlung assoziiert sind, an ein Computergerät, das mit einem Benutzer assoziiert ist, zu senden.

## Revendications

1. Un procédé comprenant :
la réception (602), par un dispositif informatique (120, 200), d'un historique d'emplacements indiquant une pluralité d'emplacements auxquels un dispositif informatique mobile était présent et, pour chaque emplacement respectif de la pluralité d'emplacements, une heure respective à laquelle le dispositif informatique mobile était présent à l'emplacement respectif, dans lequel chaque emplacement de la pluralité d'emplacements est associé à au moins une parmi une ou plusieurs catégories d'emplacements, chacune des une ou plusieurs catégories d'emplacement spécifiant un type respectif d'emplacement ;
le filtrage de la pluralité d'emplacements de l'historique d'emplacements pour exclure les emplacements qui sont supérieurs à une distance seuil de l'emplacement nominal de l'utilisateur ;
la génération (610), par le dispositif informatique, sur la base de l'historique de emplacement filtré, d'un histogramme représentant un nombre d'instances, au cours du temps, au cours desquelles le dispositif informatique mobile était présent à des emplacements respectifs associés à des catégories d'emplacement respectives parmi les une ou plusieurs plusieurs catégories d'emplacement ;
en réponse à la détermination automatique d'un emplacement actuel du dispositif informatique mobile :
la sélection automatique, sur la base de l'emplacement actuel, d'un ou plusieurs lieux dans une catégorie d'emplacement particulière à partir des une ou plusieurs catégories d'emplacement représentées dans l'histogramme ;
la génération automatique, par le dispositif informatique, sur la base de l'histogramme, d'une recommandation associée à la catégorie d'emplacement particulière, dans lequel la recommandation inclut les un ou plusieurs emplacements dans la catégorie d'emplacement particulière sélectionnée sur la base de l'emplacement actuel ; et
l'envoi, par le dispositif informatique, à un dispositif informatique associé à un utilisateur, d'informations associées à la recommandation.

2. Le procédé selon la revendication 1, dans lequel la génération automatique de la recommandation comprend en outre :
en réponse à la détermination d'une heure actuelle de la journée :
la sélection, sur la base au moins en partie de : l'heure actuelle de la journée, l'histogramme, et les heures respectives auxquelles le dispositif informatique mobile était présent aux emplacements de la pluralité d'emplacements associés à chaque catégorie d'emplacement respective parmi les une ou plusieurs catégories d'emplacement, la catégorie d'emplacement particulière parmi les une ou plusieurs catégories d'emplacement ; et
la génération automatique de la recommandation, dans lequel la recommandation indique un emplacement particulier associé à la catégorie d'emplacement sélectionnée.

3. Le procédé selon la revendication 1, comprenant en outre :
la génération de l'historique d'emplacements au moins en partie par le regroupement d'emplacements auxquels le dispositif informatique mobile était présent afin d'identifier une position géographique unique représentant un emplacement unique, sur la base des emplacements regroupés, auxquels le dispositif informatique mobile était présent.

4. Le procédé selon la revendication 1, comprenant en outre :
la réalisation d'une recherche locale basée sur une zone géographique spécifique pour déterminer une catégorie d'emplacement pour un emplacement particulier à partir de la pluralité d'emplacements.

5. Le procédé selon la revendication 1, dans lequel la génération de l'histogramme inclut le tri de la pluralité d'emplacements par catégorie d'emplacements et le tri de la pluralité d'emplacements par, pour chaque catégorie d'emplacement respective, 1) un nombre d'instances auxquelles le dispositif informatique mobile était présent à des emplacements respectifs parmi la pluralité d'emplacements associés à la catégorie d'emplacements respective et 2) une heure respective à laquelle le dispositif informatique mobile était présent à chaque emplacement parmi la pluralité d'emplacements associés à la catégorie d'emplacements particulière.

6. Le procédé selon la revendication 1, dans lequel la génération de l'histogramme inclut le tri des emplacements auxquels le dispositif informatique mobile était présent sur la base d'une période de temps d'une semaine.

7. Le procédé selon la revendication 1, dans lequel la génération automatique de la recommandation comprend la réalisation d'une recherche locale dans une zone géographique spécifique, sur la base de l'emplacement actuel, pour des emplacements dans une catégorie d'emplacement pour une recommandation.

8. Le procédé selon la revendication 1, comprenant en outre :
la consultation d'une base de données de journal de requêtes associée à l'utilisateur du dispositif informatique mobile pour déterminer les recherches et les sélections d'utilisateur de résultats de recherche qui tombent dans au moins une catégorie d'emplacement parmi la pluralité de catégories d'emplacement représentées dans l'histogramme, et
l'ajout de données à l'histogramme indiquant un nombre de recherches et un nombre de sélections de résultats de recherche qui tombent dans la au moins une catégorie d'emplacement.

9. Le procédé selon la revendication 1, dans lequel le dispositif informatique associé à l'utilisateur comprend un dispositif informatique associé à un utilisateur du dispositif informatique mobile.

10. Le procédé selon la revendication 9, dans lequel la réception de l'historique d'emplacements comprend la réception (606) de données d'enregistrement représentant une indication d'utilisateur que l'utilisateur du dispositif informatique mobile était présent au niveau d'un lieu particulier.

11. Le procédé selon la revendication 1, dans lequel le dispositif informatique associé à l'utilisateur comprend le dispositif informatique mobile.

12. Le procédé selon la revendication 1, comprenant en outre :
la sélection, sur la base au moins en partie de l'histogramme, de la catégorie d'emplacement particulière parmi les une ou plusieurs catégories d'emplacement,
dans lequel la génération automatique de la recommandation comprend,
la génération automatique de la recommandation pour les un ou plusieurs lieux dans la catégorie d'emplacement particulière, et
dans lequel l'envoi d'informations associées à la recommandation comprend l'envoi d'informations associées aux un ou plusieurs lieux dans la catégorie d'emplacement particulière.

13. Un dispositif informatique (120, 200) comprenant :
au moins un processeur (202) ; et
au moins un module (302-314) utilisable par l'au moins un processeur pour :
réceptionner (602) un historique d'emplacements indiquant une pluralité d'emplacements auxquels un dispositif informatique mobile était présent et, pour chaque emplacement respectif de la pluralité d'emplacements, une heure respective à laquelle le dispositif informatique mobile était présent à l'emplacement respectif, dans lequel chaque emplacement de la pluralité d'emplacements est associé à au moins une parmi les une ou plusieurs catégories d'emplacements, chacune des une ou plusieurs catégories d'emplacement spécifiant un type respectif d'emplacement ;
filtrer la pluralité d'emplacements de l'historique d'emplacements pour exclure les emplacements qui sont supérieurs à une distance seuil de l'emplacement nominal de l'utilisateur ;
générer (610), sur la base de l'historique d'emplacement, un histogramme représentant un nombre d'instances, au cours du temps, au cours desquelles le dispositif informatique mobile était présent à des emplacements respectifs associés à des catégories d'emplacement respectives parmi les une ou plusieurs catégories d'emplacement ;
en réponse à la détermination automatique d'un emplacement actuel du dispositif informatique mobile :
sélectionner automatiquement, sur la base de l'emplacement actuel, un ou plusieurs lieux dans une catégorie d'emplacement particulière à partir des une ou plusieurs catégories d'emplacement représentées dans l'histogramme ; et
générer automatiquement, sur la base de l'histogramme, une recommandation associée à la catégorie d'emplacement particulière, dans lequel la recommandation inclut les un ou plusieurs emplacements dans la catégorie d'emplacement particulière sélectionnée sur la base de l'emplacement actuel.

14. Un support de stockage lisible par ordinateur non transitoire stockant des instructions qui, lorsqu'elles sont exécutées, amènent au moins un processeur (202) d'un dispositif informatique (120. 200) à :
réceptionner (602) un historique d'emplacements indiquant une pluralité d'emplacements auxquels un dispositif informatique mobile était présent et, pour chaque emplacement respectif de la pluralité d'emplacements, une heure respective à laquelle le dispositif informatique mobile était présent à l'emplacement respectif, dans lequel chaque emplacement de la pluralité d'emplacements est associé à au moins une parmi les une ou plusieurs catégories d'emplacements, chacune des une ou plusieurs catégories d'emplacement spécifiant un type respectif d'emplacement ;
filtrer la pluralité d'emplacements de l'historique d'emplacements pour exclure les emplacements qui sont supérieurs à une distance seuil de l'emplacement nominal de l'utilisateur ;
générer (610), sur la base de l'historique d'emplacement, un histogramme représentant un nombre d'instances, au cours du temps, au cours desquelles le dispositif informatique mobile était présent à des emplacements respectifs associés à des catégories d'emplacement respectives parmi les ou plusieurs catégories d'emplacement ;
en réponse à la détermination automatique d'un emplacement actuelle du dispositif informatique mobile :
sélectionner automatiquement, sur la base de l'emplacement actuel, un ou plusieurs lieux dans une catégorie d'emplacement particulière à partir des une ou plusieurs catégories d'emplacement représentées dans l'histogramme ;
générer automatiquement, sur la base de l'histogramme, une recommandation associée à la catégorie d'emplacement particulière, dans lequel la recommandation inclut les un ou plusieurs emplacements dans la catégorie d'emplacement particulière sélectionnée sur la base de l'emplacement actuel ; et
envoyer, à un dispositif informatique associé à un utilisateur, des informations associées à la recommandation.
